# EUROPEAN PATENT APPLICATION

(11) **EP 2 107 493 A1**
(43) Date of publication of application: **07.10.2009**
(21) Application number: 09002324.3
(22) Date of filing: 18.02.2009
(51) Int. Cl.: G06F 21/24

(54) **Business management system**

(30) Priority: 31.03.2008 JP 2008092498
(71) Applicant: Hitachi Ltd., Chiyoda-ku Tokyo 100-8280 (JP)
(72) Inventor: Nemoto, Shigeyuki, Chiyoda-ku Tokyo 100-8220 (JP); Yashiro, Satoshi, Chiyoda-ku Tokyo 100-8220 (JP); Kobayashi, Ken, Chiyoda-ku Tokyo 100-8220 (JP); Ishino, Chiharu, Chiyoda-ku Tokyo 100-8220 (JP); Matsui, Hiroki, Chiyoda-ku Tokyo 100-8220 (JP); Honda, Taiki, Chiyoda-ku Tokyo 100-8220 (JP); Nishimoto, Hideaki, Chiyoda-ku Tokyo 100-8220 (JP)
(74) Representative: Strehl Schübel-Hopf & Partner

(57) **Abstract**

There is provided a management server technology that allows a user to continuously use a business function of a business server without logging in again to the business server, even if the authority of the user to the business server is changed. The business server receives an access from a user terminal, and requests a management server to perform user authentication. In response to the authentication request, the management server determines a future scheduled authority of the user, generates not only authority information at the time of the user authentication, but also a determination result including the future scheduled authority information, and transmits them to the business server. The business server provides the user terminal with a new business function based on the scheduled user authority information, upon expiration of a validity period of the user authority to the current business function.

## Description

### BACKGROUND OF THE INVENTION

The present invention relates to a system and method for managing a business function provided to a user terminal from a business server.

The network system has been widely used in business applications, in which a user accesses a network through a user terminal to use a business function provided by a business server. An example of this type of network system is described in OASIS Assertions and Protocols for the OASIS Security Assertion Markup Language (SAML) V2.0 (OASIS Standard, 15 March 2005). This network system includes, in addition to the business server, a user information management server to perform user authentication taking advantage of information about the authority of the user using the user terminal (hereinafter referred to as "user information"), and the business server provides the user with a business function corresponding to his or her authority.

### SUMMARY OF THE INVENTION

A user information management server authenticates a user based on the user information provided by the user at the time when the user logs in to a business server. Then, the user information management server determines the authority that allows the approved user to use the business server function, and notifies the business server of the determination result.

When the user authority is expected to be changed, the approved authority is only valid until the user authority is changed. In order to use a business function of the changed authority following the business function that the user uses under the current authority, the user must log in again to the business server. This has been the same with the authority change associated with the expansion of the business function that the user can use.

As a means of solving such a problem, a so-called push-type system is considered in which the user information management server notifies the user using the business server, of the fact that the authorized business function is expected to be changed. However, this system is disadvantageous in that the user information management server must know the IP address of the business server. In addition, there is a risk that the security function of the business server will refuse notification from the user information management server. Consequently, the push-type system has not functioned as an effective means.

As described above, in the system for managing the user authentication and authority by the management server when the user uses a business function of the business server, it has been difficult to prevent a decrease in the operational effectiveness due to a change in the user authority.

The present invention aims at providing a business management technology that allows a user to continuously use a business function of a business server without logging in again to the business server, even if the user authority to the business server is changed.

In order to achieve the above object, the business management according to the present invention is designed to allow the user to use a future business function following the current business function that the user is using, by granting the user the authority to use the future business function at the time of user authentication, and thereby saving the user from having to retry authentication by logging in again to the business server.

According to the present invention, it is possible to realize business management designed to allow a user to continuously use a business function of a business server, without logging in again to the business server, even if the user authority to the business server is changed.

### BRIEF DESCRIPTION OF THE DRAWINGS

Fig. 1 is a hardware block diagram of a user terminal, a business server, and a management server, according to the present invention;
Fig. 2 is a functional block diagram of a system according to a first embodiment of the present invention;
Fig. 3 is a management table storing user information according to the first embodiment;
Fig. 4 is a flowchart showing the operation of the first embodiment;
Fig. 5 is a functional block diagram of a system according to a second embodiment;
Fig. 6 is a management table storing the user information according to the first embodiment;
Fig. 7 is a flowchart showing the operation of the second embodiment;
Fig. 8 is a continuation of the flowchart of Fig. 7;
Fig. 9 is a continuation of the flowchart of Fig. 8;
Fig. 10 is a management table storing another user information; and
Fig. 11 is an example of a Web browser window of a user terminal.

### DESCRIPTION OF THE PREFERRED EMBODIMENTS

Next, preferred embodiments of the present invention will be described with reference to the accompanying drawings. It should be understood, however, that the present invention is not limited to the following embodiments.

### First Embodiment

The first embodiment is an example of a business management system in which the business function authority of a user is expanded at a certain time. The business management system includes a user terminal, a business server, and a user information management server that are connected to a network.

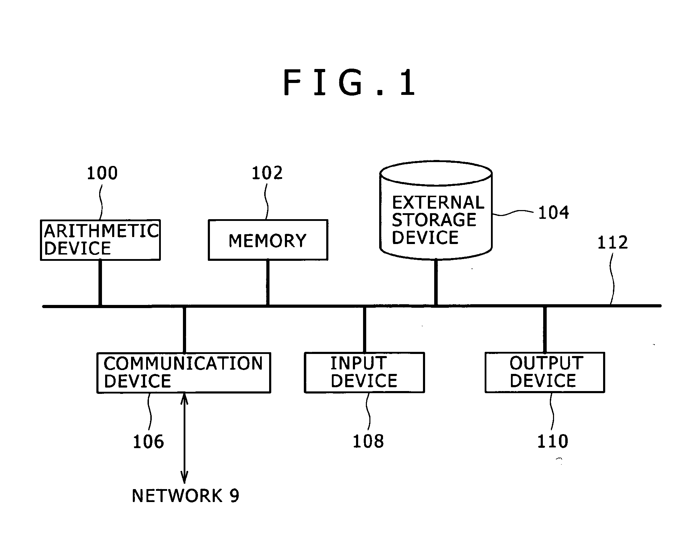

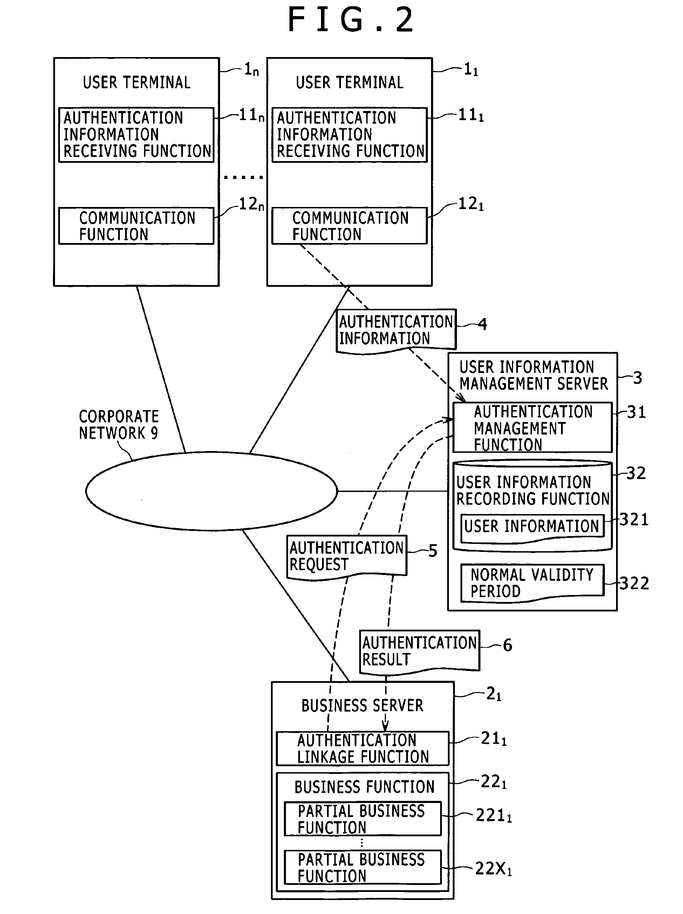

Fig. 1 shows a hardware block diagram of a computer common to the user terminal, the business server, and the user information management server. Fig. 2 shows a detailed block diagram of the business management system. In Fig. 2, the system is configured such that when users access a business server 2₁ through user terminals 1₁ to 1ₙ connected to a network such as LAN, a user information management server 3 authenticates each user and determines a business function authority to be granted to each user.

As shown in Fig. 1, the user terminals 1₁ to 1ₙ, the business server 2₁, and the user information management server 3 are realized by a computer system. The computer system includes an arithmetic device 100, a memory 102, an external storage device 104 such as a hard disk, a communication device 106 for communicating with other devices through a network 9, an input device 108 such as a keyboard or button, an output device 110 such as a monitor, and an interface (or a bus) 112 for performing data exchange among the respective devices. The arithmetic device 100 executes a predetermined program loaded in the memory 102 to realize a process as the user terminal, the business server, or the user information management server.

As shown in Fig. 2, the plural user terminals 1₁ to 1ₙ for performing input operation by the users, the business server 2₁ for providing each user with a business function, and the user information management server 3 for managing the user information to make a determination for granting each user the authority to use a business function, are all connected to the network 9. Incidentally, the network is not limited to LAN, and other networks may be used, such as an IP network and SAN.

The user terminals 1₁ to 1ₙ include authentication information receiving functions 11₁ to 11ₙ for receiving inputs of authentication information 4 from the users, and communication functions 12₁ to 12ₙ for communicating with the other servers on the network. These functions are realized by an electronic circuit or a program. The program is stored in the memory. The arithmetic device 100 realizes each function by referring to the program. This is the same for other functions described later. The authentication information 4 from the users includes, but not necessarily limited to, passwords, electronic certificates, and biometric information.

The business server 2₁ includes an authentication linkage function 21₁ and a business function 22₁. The authentication linkage function 21₁ receives the authentication information 4 from the user terminals and provides a control for linking to the business function 22₁. The business function 22₁ provides a business application to the users. The business function 22₁ is a set of partial business functions 221₁ to 22X₁. The partial business functions each realize different business functions.

The business server 2₁ can be, but is not limited to, a Web server for HTTP communication. It is also possible that plural business servers 2₁ share a single authentication linkage function 2.

The user information management server 3 includes an authentication management function 31 and a user information recoding function 32. The authentication management function 31 receives an authentication determination request 5 from the business server 2₁, and generates an authentication result 6 by referring to the user information function 32. The user information recording function 32 puts the users identification information, authentication information, and authority information together as a table, and stores user information 321 into the memory so that the user information 321 can be referred to as necessary. Further, the user information management server holds the normal validity period of the authentication result 6 as a normal validity period 322 in the table.

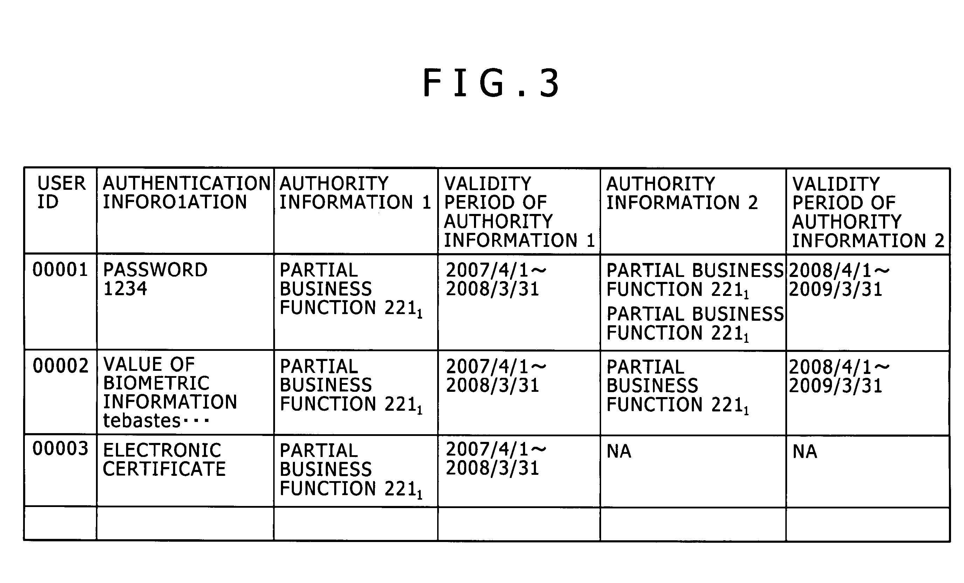

Fig. 3 shows an example of a user information table storing the user information 321 to be managed in the user information recording function 32. This table stores IDs for identifying the users, authentication information, authority information indicating available business functions, and validity periods of the authority information. In this table, plural authority information can be registered for each user ID, and a different validity period can be specified for each piece of authority information. For this reason, a future business function authority can be stored in the table.

Incidentally, in the user information table, the authentication information can be stored not only per user, but also for each type and content of the user authority, or for each set of plural authorities, or for each group of plural users.

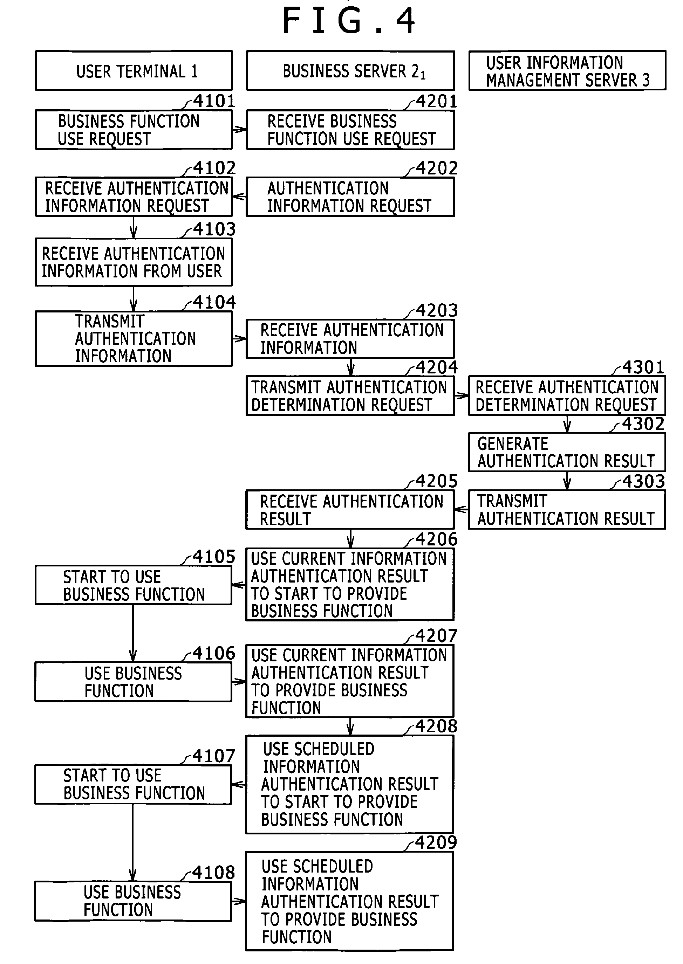

Next, the operation of the network system of Fig. 2 will be described with reference to a timing chart of Fig. 4, assuming that the user authority is changed when a user of ID00001 is using the function of the business server 2₁ as shown in Fig. 3. First, the user uses a communication function 12 of the user terminal 1 to access the business server 2₁ (Steps 4101, 4201).

As it is necessary to authenticate the user upon determination and identification of the user authority, the business server 2₁ uses the authentication linkage function 21₁ to request the authentication information 4 to the user terminal 1 (Steps 4202, 4102). The user terminal 1 receives the authentication information 4 such as the user ID and the password from the user (Step 4103), and transmits the identification information and the authentication information 4 to the business server 2₁ (Step 4104).

The business server 2₁ uses the authentication linkage function 21₁ to receive the authentication information 4 (Step 4203). Then, the business server 2₁ transmits the authentication determination request 5 including the user ID and the authentication information 4 to the user information management server 3 (Step 4204). The user information management server 3 uses the authentication management function 31 to receive the authentication determination request 5 (Step 4301).

In Step 4301, the authentication management function 31 of the user information management server 3 refers to the user information 321 in the user information recording function 32, to make a determination of whether the received authentication information is identical to the authentication information in the user information 321 with respect to the user ID (first process).

After determining the identification of the authentication information, the user information management server 3 proceeds to a second process, in which it compares the present time obtained from an NTP server and the like, the authority information corresponding to the user ID in the user information recording function 32, and the validity period of the authority information, thereby determining the authority whose validity period corresponds to the present time and generating a current information authentication result (Step 4302). The authentication result includes information relating to the authority information and the validity period of the authority information.

The user information management server 3 specifies the normal validity period 322 as the validity period of the current information authentication result. However, when the validity period of the authority information expires in the normal validity period 322, the validity period of the authority has priority over the normal validity period 322.

When the validity period of the authority is prioritized, the user information management server 3 generates a scheduled information authentication result, in addition to the current information authentication result. The user information management server 3 identifies the future authority information whose validity period overlaps the period between the present time and the time obtained by adding the normal validity period 322 to the present time. Then, the user information management server 3 generates the scheduled information authentication result including the identified future authority information and the validity period of the future authority. For the end time of the validity period of the future authority, the normal validity period has priority over the original time stored in the table.

Incidentally, because the user information management server is to assume responsibility for the normal validity period, it does not typically generate the scheduled information authentication result even if the scheduled authority information exists after expiration of the normal validity period. However, the user information management server may give the business server the scheduled information as reference information.

In the first process, when the authentication information input to the user terminal is different from the authentication information stored in the table of Fig. 3, the user information management server 3 generates an authentication result showing that the authentication failed.

In the second process, when there is no authority information with the validity period corresponding to the present time, the user information management server 3 generates an authentication result showing that the authentication failed because no authorized function exists at the present time.

The user information management server 3 uses the authentication management function to transmit the generated authentication result to the business server 2₁ (Step 4303). The business server 2₁ uses the authentication linkage function 21₁ to receive the authentication result (Step 4205). When the authentication result is a failure, the user information management server 3 notifies the user terminal 1 of the authentication failure.

When the authentication result is not a failure, the user information management server 3 starts to provide the user terminal 1 with the partial business function 221₁ that is only available in the current information authentication result (Step 4206). In response to this, a client 1 uses the partial business function 221₁, and the business server 2₁ provides the business function to the client 1 (Steps 4105, 4106, 4207).

When the validity period of the current information authentication result expires, and when the scheduled information authentication result exists, the business server 2₁ starts to provide the user terminal with the available partial business functions 221₁ and 222₁ (Step 4208). The business server has already stored the scheduled information authentication result into the memory.

A detailed description will be given with reference to Fig. 3. The user (ID00001) using the partial business function 221₁ until March 31, 2008 will be able to use the business function 222₁ from April 1^{st} 2008 in addition to continuously using the current business function 221₁ (Steps 4108, 4209). The business server may cause the user terminal to display an image notifying the user of the scheduled business function, on the current business function window. When the authority information of the current information authentication result expires, and when no scheduled information authentication result exits, the processes in step 4202 and subsequent steps are repeated.

With the business management system according to the first embodiment, because the business server has the scheduled information authentication result for the case in which the authority to use the current business function of the business server has expired before the end of the normal validity period, the user can use another business function without logging in again to the business server for the authentication process.

### Second Embodiment

Next, a second embodiment of the present invention will be described. A network system according to this embodiment uses SAML (Security Assertion Markup Language) protocol for communication among the user terminal, the business server, and the user information management server. In this embodiment, the description of the same configuration as in the first embodiment will be omitted.

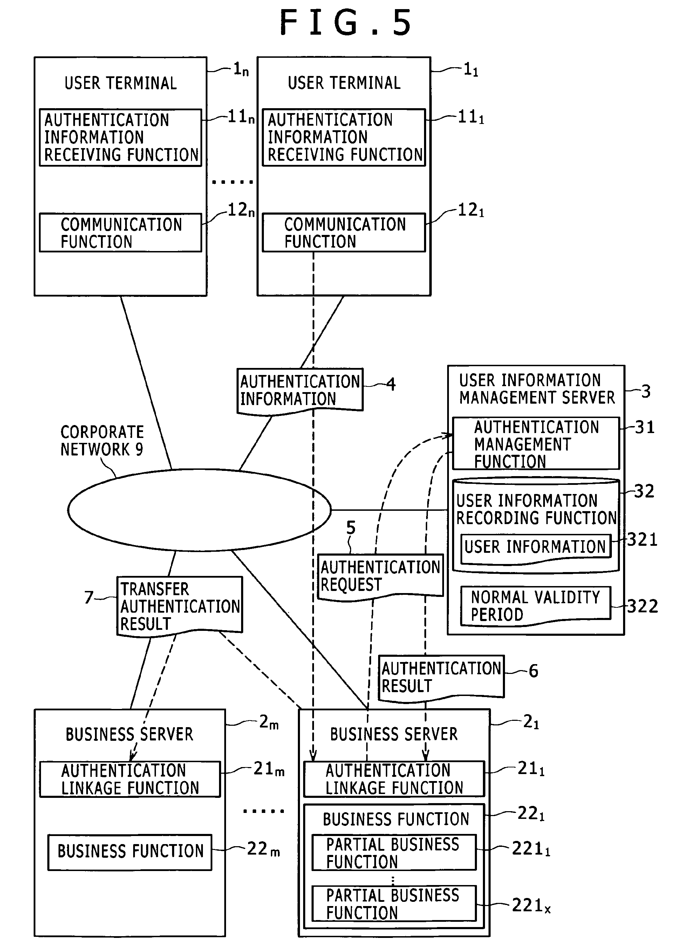

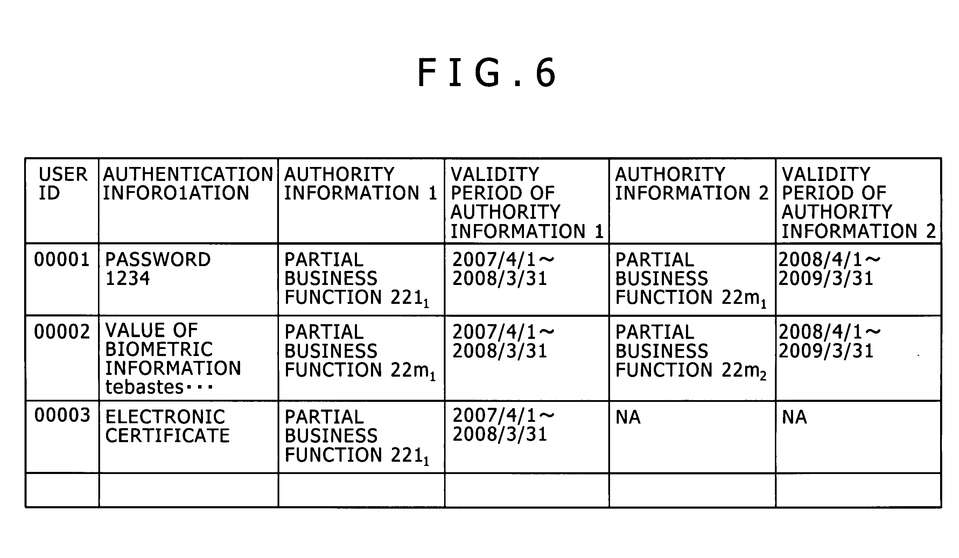

Fig. 5 is a block diagram of this embodiment. Fig. 6 is a management table storing user information in this embodiment. The business server 2₁ provides the user (ID00001) with the business function 221₁ approved by the current authority information. A business server 2ₘ provides the user with a business function 22ₘ₁ that is approved by the future authority information.

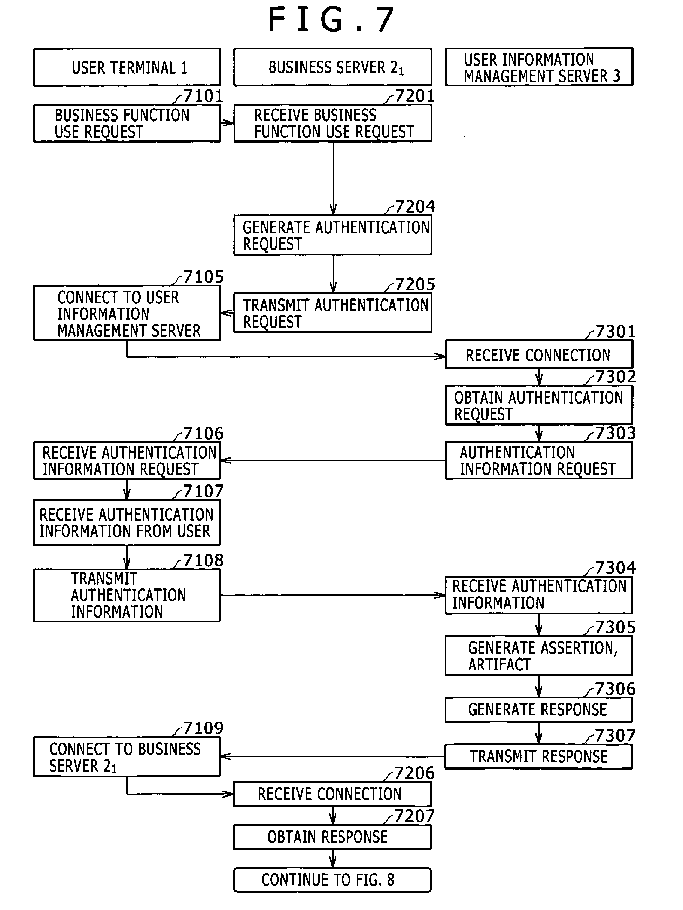

Thus, referring to the timing charts of Figs. 7 to 9, a description will be given of the operation of a protocol communication in the course of changing the user authority to use a function of a business server 2₂ while the user (ID00001) is using a function of the business server 2₁.

The user uses the communication function 12 of the user terminal 1 to access the business server 2₁ (Steps 7101, 7201). The business server 2₁ uses the authentication linkage function 21₁ to generate Authentication Request according to the SAML protocol (Step 7204).

This Authentication Request includes HTTP redirect information with an instruction to connect to the user information management server 3. The business server 2₁ transmits Authentication Request to the user terminal 1 (Step 7205). The user terminal 1 connects to the user information management server 3, based on the HTTP redirect information included in Authentication Request (Step 7105). The user information management server receives a connection request from the business server 2₁ (Step 7301).

The user information management server 3 obtains Authentication Request (Step 7302), and requests the user terminal 1 to input the authentication information (Step 7303). The user terminal 1 receives this request (Step 7106). The user terminal 1 receives the authentication information such as the user ID and the password from the user (Step 7107), and transmits the authentication information 4 to the user information management server 3 (Step 7108). The user information management server 3 uses the authentication management function 31 to receive the authentication information 4 (Step 7304).

The authentication information management function 31 generates an authentication result by performing the same operation as described above in Step 4301 (see Fig. 4). The authentication function 31 generates Assertion with the authentication result described in the Attribute element. Then, the authentication function 31 generates Artifact corresponding to Assertion (Step 7305).

When the authentication result is a failure, the authentication function 31 does not generate Assertion, but instead notifies the user terminal 1 of the authentication failure according to the specifications of SAML.

The authentication management function 31 of the user information management server 3 generates Response (Step 7306). Response includes Artifact. Next, the user information management server transmits Response including the HTTP redirect information, to the user terminal 1 to connect to the business server 2₁ (Step 7307).

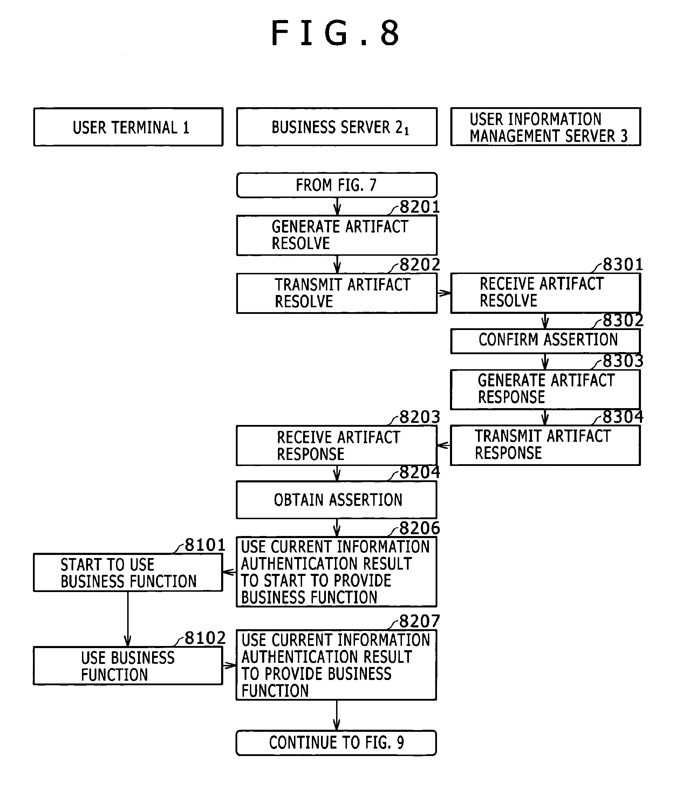

Upon receiving Response, the user terminal connects to the business server 2₁ based on the HTTP redirect information included in Response, and the business server 2₁ receives the connection (7206). The business server 2₁ uses the authentication linkage function 21₁ to obtain Response (Step 7207), and generates Artifact Resolve to verify Artifact included in Response (Step 8201 in Fig. 8). Then, the business server 2₁ transmits Artifact Resolve to the user information management server 3 (Step 8301).

The user information management server 3 uses the authentication management function 31 to receive Artifact Resolve (Step 8301), and confirms Assertion corresponding to the received Artifact Resolve (Step 8302). Upon confirmation of Assertion, the business server 2₁ generates Artifact Response (Step 8303), and transmits it to the business server 2₁ (Step 8304). Artifact Response includes Assertion.

The business server 2₁ receives Artifact Response (Step 8203), and obtains Assertion (Step 8204). The business server 2₁ uses the authentication linkage function 21₁ to extract the authentication result from Assertion. Then, the business server 2₁ starts to provide the partial business function 221₁ which is only available in the current information authentication result (Step 8206). In this way, the user terminal 1 achieves both the start and continuous use of the partial business function 221₁ (Steps 8101, 8102, 8207).

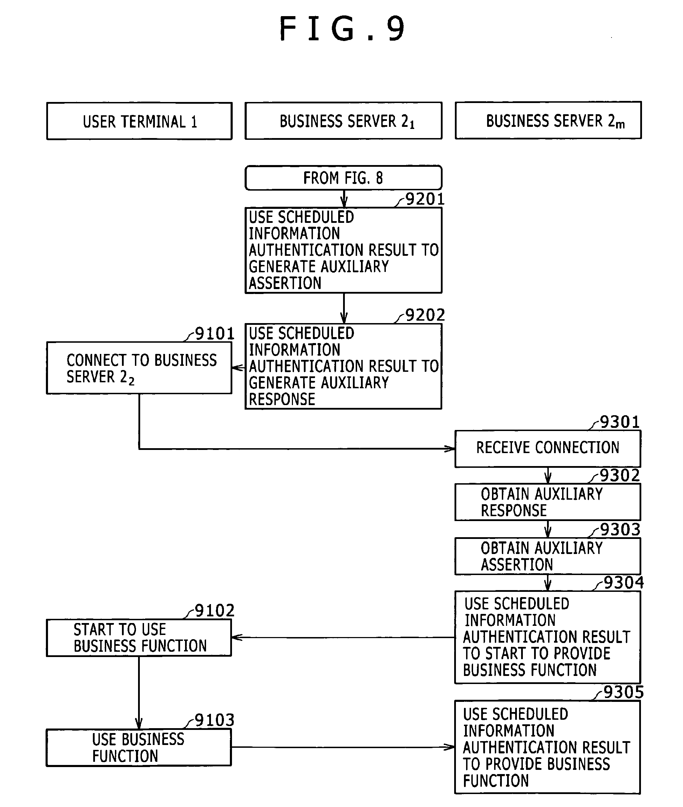

When the validity period of the current information authentication result expires, and when the scheduled information authentication result exists, the authentication linkage function 21₁ of the business server 2₁ generates an auxiliary Assertion from the scheduled information authentication result (Step 9201 in Fig. 9). The auxiliary Assertion is described in the same format as Assertion. The scheduled information authentication result is described in the Attribute element of the auxiliary Assertion.

The authentication linkage function 21₁ of the business server 2₁ generates an auxiliary Response from the scheduled information authentication result, and transmits it to the user terminal 1 (Step 9202). The auxiliary Response includes the auxiliary Assertion.

Based on the auxiliary Response including the HTTP redirect information for connection to the business server 2ₘ, the user terminal 1 transmits a request to connect to the business server 2ₘ, to the business server 2ₘ (Step 9101). The business server 2ₘ receives the connection from the user terminal 1 (Step 9301). The business server 2ₘ obtains the auxiliary Response from the user terminal 1 (Step 9302), and then obtains the auxiliary Assertion from the auxiliary Response (Step 9303).

The authentication linkage function 21ₘ of the business server 2ₘ obtains the scheduled information authentication result from the auxiliary Assertion. Then, the authentication linkage function 21ₘ provides the user terminal 1 with the business function included in the scheduled information authentication result with the validity period of the business function (Steps 9304, 9102, 9103, 9305).

As described in the first and second embodiments, the authority for the user to be able to use the business function is practically changed temporally or for a long time, for example, due to internal transfer, external assignment, or other type of business function relocation.

The authority change includes changes in the authority in order to restrict the use of business functions, limit available business functions, change available business functions, or add available business functions.

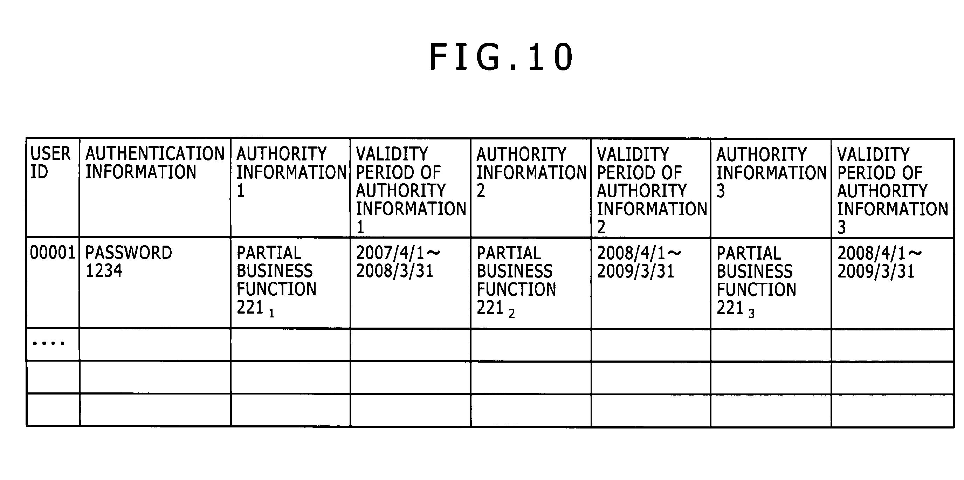

As shown in Fig. 10, there may happen that plural pieces of authority information are stored with their validity periods overlapping in the user information table. In this case, it is also preferable that the user information management server 3 assigns a priority order to the plural pieces of authority information, and records the priority order in the scheduled information authentication result upon generation of the scheduled information authentication result in Step 7301. The business server 2₁ transmits the HTTP redirect information to the user terminal 1, upon generation of Response in Step 9202, in order to connect to the business server that provides the user terminal with a business function of higher priority.

Incidentally, although the business server first executes the high priority business function, the user can select a business function with lower priority or can change the high priority business function to the lower priority business function. The business server causes the user terminal to display a window showing plural options available to the user, so that the user can select one of them.

In the above embodiment, when the validity period of the authority information corresponding to the first business function has expired, the business server having performed the first business function or another business server provides the user terminal with the second business function which is different from the first business function. Thus, it is also possible to generate special authority information for the user information management server to cause the first or second business server to execute an intermediate business function having intermediate characteristics between the first and second business functions.

For example, both reading and writing from the user terminal to the business server are possible in the first business function, while in the intermediate business function, the user terminal enables reading, but not writing, from the business server. For the user, the first business function is gradually limited before the first business function is completely changed to the second business function, allowing the user to predict disappearance or change of the authority. In this case, the user management server generates the scheduled authority information described above, including this special authority information and the validity period of the special authority.

In the above embodiment, the validity condition of the authority information is defined by time. However, the validity condition can also be defined by a special event such as a disaster. The user management server generates authority information of a disaster as well as scheduled authority information including the existence of an event of disaster occurrence, and transmits the authority information and the scheduled authority information to the business server in normal times. If the user management server does not actually function due to a disaster or other special circumstances, the business server can provide a necessary business function to the user terminal based on the authentication that the business server has previously received from the user management server.

Further, in the second embodiment, the business server 2₁ generates control information to cause the user terminal to connect to the business server 2ₘ when it reaches the validity period of the scheduled business function. However, it is also possible that the business server 2₁ first notifies the user terminal of the connection to the business server 2ₘ, and then generates the control information when receiving confirmation input from the user.

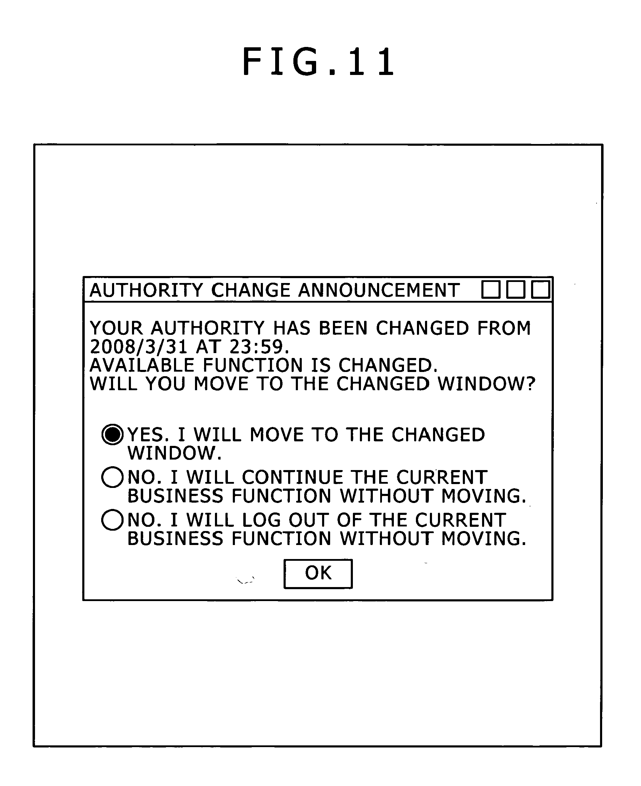

Fig. 11 shows a Web browser window of a user terminal. The window displays a window from the business server according to the current authority information. The window indicates that the business function authority approved as the future authority reaches the predetermined time when the user logs in to the business server, and asks the user whether to move from the current business function to the business function of the changed authority. When the user does not move to another business function, the business server is logged off of the user terminal upon expiration of the authority of the current business function the user is accessing.

## Claims

1. A business management system comprising:
a business server for providing a business function to a user terminal;
a management server for managing information of a user using the user terminal; and
a network for connecting the business server with the management server,
wherein the management server includes:
a first memory storing user information including authentication information of the user, authority information for identifying the business function that the user is authorized to use, and a validity condition of the authority information, which are associated with each other; and
a first arithmetic device for obtaining the authentication information, determining the authority information corresponding to the authentication information and the validity condition of the authority information, and transmitting a determination result to the business server,
wherein the business server includes:
a second memory; and
a second arithmetic device for executing a program to provide the user with the business function,
wherein the second arithmetic device provides the user terminal with the business function identified by the authority information included in the determination result, under the validity condition,
wherein the first arithmetic device determines future authority information with the validity condition established after reception of the user authentication information,
wherein the business server stores the future authority information into the second memory, and
wherein the second arithmetic device refers to the second memory, to provide the user terminal with a future business function identified by the future authority information under the validity condition of the future authority information.

2. The business management system according to claim 1,
wherein the validity condition includes a validity period of the authority information, the second arithmetic device providing the user with the future business function identified by the future authority information in the validity period of the future authority information.

3. The business management system according to claim 2,
wherein the first arithmetic device determines current authority information of the validity period including the time when the user authentication information is received, and
wherein the business server stores the current authority information into the second memory, the second arithmetic device referring to the second memory to provide the user with the current business function identified by the current authority information, as well as the future business function identified by the future authority information in the validity period of the future authority information.

4. The business management system according to claim 3,
wherein the management server or the business server does not ask the user to provide the authentication information, after the first arithmetic device determines the future authority information and before the second arithmetic device provides the user with the future business function.

5. A business management system comprising:
a plurality of business servers for providing a business function to a user terminal;
a management server for managing information of a user using the user terminal; and
a network for connecting the plurality of business servers with the management server,
wherein the management server includes:
a first memory storing user information including authentication information of the user, authority information for identifying the business function that the user is authorized to use, and a validity period of the authority information, which are associated with each other; and
a first arithmetic device for obtaining the authentication information, determining the authority information corresponding to the authentication information and the validity period of the authority information, and transmitting a determination result to at least one of the plurality of business servers,
wherein each of the plurality of business servers includes:
a second memory; and
a second arithmetic device for executing a program to provide the user with the business function,
wherein the second arithmetic device provides the user terminal with the business function identified by the authority information included in the determination result in the validity period,
wherein a first business server of the plurality of business servers provides the user terminal with a first business function, and a second business server of the plurality of the business servers provides the user terminal with a second business function,
wherein authority information of the second business function is stored in the user information so that a validity period of the second business function starts after expiration of a validity period of the first business function,
wherein the first arithmetic device determines first authority information corresponding to the first business function and a first validity period, as well as second authority information corresponding to the second business function and a second validity period, and transmits determination results to the first business server,
wherein the first business server stores the determination results into the second memory, the second arithmetic device referring to the second memory to provide the user terminal with a first business function identified by the first authority information under the first validity condition, while transmitting the determination result including the second authority information and the second validity period to the second business server, and
wherein the second business server stores the determination result into the second memory, the second arithmetic device referring to the second memory to provide the user terminal with a second business function identified by the second authority information under the second validity condition.

6. The business management system according to claim 5,
wherein transmission of the determination result including the first authority information and the first validity period to the first business server is through the user terminal.

7. The business management system according to claim 6,
wherein transmission of the determination result including the second authority information and the second validity period to the second business server is through the user terminal.

8. The business management system according to claim 7,
wherein the management server transmits the determination result by using the SAML (Security Assertion Markup Language) protocol.

9. The management server defined in claim 8.

10. The business server defined in claim 9.
